# EUROPEAN PATENT APPLICATION

(11) **EP 2 924 931 A1**
(43) Date of publication of application: **30.09.2015**
(21) Application number: 14162016.1
(22) Date of filing: 27.03.2014
(51) Int. Cl.: H04L 12/733, H04L 12/725, H04L 12/715

(54) **Method of coumputing a path for a data connection and path computation element**

(71) Applicant: Nokia Solutions and Networks GmbH & Co. KG, 81541 Munich (DE)
(72) Inventor: Hoffmann, Klaus, 80995 Munich (DE)

(57) **Abstract**

It is described a method of computing a path (71, 72) for a data connection in a network (1), wherein a requesting entity (2) requests a data connection, which provides a particular quality of service, and wherein a path computation element (51, 52) of the network (1) computes a path (71, 72) through the network (1) for the requested data connection. The requesting entity (2) sends a time limit to the path computation element (51, 52), within the requesting entity (2) expects a result from the path computation element (51, 52). In succession the path computation element (51, 52) estimates a time for path computation and reports the inability to compute the path (71, 72) within the expected time back to the requesting entity (2) if the estimated time is above the expected time. Furthermore, a path computation element (51, 52) and a network (1) allowing the presented method to be executed are disclosed.

## Description

### Field of invention

The present invention relates to a method of computing a path for a data connection in a network, wherein a requesting entity requests a data connection, which provides a particular quality of service, and wherein a path computation element of the network computes a path through the network for the requested data connection. The present invention also relates to a path computation element, comprising means for receiving a request from a requesting entity requesting a data connection, which provides a particular quality of service, means for computing a data path through the network for the requested data connection and means for reporting the ability to provide a data connection having the requested quality of service to the requesting entity. Finally, the present invention relates to a data network, comprising one or more path computation elements as disclosed above.

### Art Background

A method, a path computation element and a network of the kind above are known in prior art in principle. Quite often - depending on the size of a network - there is a number of possible paths for a data connection between a requesting entity/party and a target entity/party. Usually, a number of possible paths are calculated and in the end one of them is used for switching the data communication. For example, US 7,995,593 B2 discloses a system and a method for calculating paths in a network.

However, this approach can lead to undesired consequences if path calculation takes a long time, for example due to the size of the network, delays in data communication and/or load of the path computation element. Usually, the requesting entity waits a certain period of time for a response from a path computation element, but it may turn too early to an alternative path computation element or even may stop the request. Quite easily the situation may arise, that the inpatient requesting entity prematurely puts a number of requests and causes a lot of calculation work without getting any satisfying result.

Accordingly, there may be a need for an improved method of establishing a data connection in a network, an improved path computation element and an improved network. In particular, the selection of a data path shall be based on a more efficient procedure.

### Summary of the Invention

This need may be met by the subject matter according to the independent claims. Advantageous embodiments of the present invention are described by the dependent claims.

According to a first aspect of the invention there is provided a method as disclosed in the opening paragraph,
- wherein the requesting entity sends a time limit to the path computation element, within the requesting entity expects a result from the path computation element,
- wherein the path computation element estimates a time for path computation and
- wherein the path computation element reports the inability to compute the path within the expected time back to the requesting entity if the estimated time is above the expected time.

According to a further aspect of the invention there is provided a path computation element as disclosed in the opening paragraph, additionally comprising
- means for receiving a time limit, within the requesting entity expects a result from the path computation element,
- means for estimating a time for path computation and
- means for reporting the inability to compute the path within the expected time back to the requesting entity if the estimated time is above the expected time.

According to yet another aspect of the invention there is provided a data network, comprising one or more path computation elements as defined above.

In the way presented above the requesting entity can be prevented from prematurely putting a number of requests and causing a lot of useless calculation work. Accordingly, the selection of a data path can be chosen more efficiently.

It should be noted at this point that "data connection" has a general meaning in the context of the invention. Hence "data" may be audio data, text data, video data, picture data and/or machine data (e.g. program code, parameters, etc.) for use by computers.

Furthermore, it should be noted that the requesting entity is not necessarily part of the requested data connection. The requesting entity may also request the data connection on behalf of the communication partners.

According to a further aspect of the invention, a path tree and/or an overlay network is computed for the requested data connection. The disclosed method may be used for computation simple paths between two parties (point to point connection, P2P for short), path trees between a single party and a plurality of parties (point to multipoint connection, P2MP for short) and/or overlay networks between a plurality of parties (multipoint to multipoint connection, MP2MP for short). A path tree and an overlay network can also be seen as a crowd of single paths. In case of a path tree all paths start (respectively end) at one point, in case of an overlay network they crisscross.

An "overlay network" or virtual network generally is a network, which is built on the top of another network. Nodes in the overlay can be considered as being connected by virtual or logical links respectively paths. Each path may correspond to a number of physical links in the underlying network. The underlying physical network itself may consist of connected subnetworks, which in particular are operated by different operators or providers.

It should be noted that the term "path computation element" does not limit the computation entity to the computation of a path. A "path computation element" may also calculate trees and overlay networks.

It should also be noted that the invention is not limited to a single path a single tree or a single overlay network to be computed. By contrast, also a plurality of paths, trees and/or overlay networks may be computed by a path computation element.

According to a further aspect of the invention, the path computation element starts computing the path if the estimated time is within the expected time. In this embodiment, the path computation element computes the path only if it can fulfill the request of the requesting entity. Hence, possibly useless computation work can be avoided. However, the path computation element may compute the path anyway, i.e. independent of exceeding the expected time or not. In this way, no time is left until the path computation starts. Accordingly, the requesting entity receives a (possibly delayed) result as soon as possible.

According to another aspect of the invention, the path computation element starts computing the path on request of the requesting entity. In this embodiment, the requesting entity decides whether calculation shall be started or not.

According to a further aspect of the invention, the path computation element reports the estimated time to the requesting entity. Accordingly, the requesting entity gets a meaningful basis for decision how to deal with the exceeding of computation time. It shall be noted that reporting the inability to compute the path within the expected time may simply be done by reporting the estimated time. If the estimated time exceeds the expected time, this is an implicit inability report.

According to yet another aspect of the invention, the path computation element reports the estimated time only if it above the expected time. In this way, the communication between the requesting entity and a path computation element can be simplified and/or minimized.

In another preferred embodiment, the path computation element during path computation estimates the time for finishing path computation and reports a need for additional time to the requesting entity if the estimated time is above the expected time. In this embodiment, also unexpected delays during path computation are taken into consideration. Accordingly, the requesting entity can decide how to deal with unexpected exceedance of computation time.

In a beneficial variant of the presented method, the requesting entity stops the data connection request with respect to the path computation element, from which it receives a report about the inability to compute the path within the expected time, and requests a data connection from another path computation element. Accordingly, the requesting entity turns from the path computation element, which is not able to compute a path within the given time limit, to another path computation element with better prospects of success. The inability may be reported before starting path computation or also during computation.

In a further beneficial variant of the presented method, the requesting entity completely stops the data connection request if it receives a report about the inability to compute the path within the expected time from a path computation element. According to this embodiment, the request for a data connection is abandoned. For example, such an approach is useful, if the need for a data connection exists just for a short time (e.g. shorter than the path calculation takes).

It is advantageous, if the requesting entity releases the path computation element or stops the data connection request only if the deviation of the estimated time from the expected time exceeds a given threshold. Accordingly, the requesting entity tolerates an exceed of path computation time, for example it the exceed is negligible. The deviation of the estimated time from the expected time for example may be determined by the difference or the ratio between the estimated time and the expected time.

According to another embodiment of the invention, the requesting entity sends requests for a data connection to a plurality of path computation elements in parallel. In this way competition between different providers can be improved. Moreover, the requesting entity can get a result with higher likehood.

According to yet another embodiment of the invention, the requested quality of service comprises one or more of the parameters delay, jitter, CPU cycle, storage and/or bandwidth. Accordingly, the requesting entity can place a meaningful request.

Advantageously, the "Path Computation Element Protocol" is used for communication between the requesting entity and the path computation element. In particular, the "PcNotify" message of the "Path Computation Element Protocol" is used for reporting the inability to compute the path within the expected time back to the requesting entity. Accordingly, the invention may be implemented with just low effort as existing protocols are used respectively extended.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows an exemplary data network and
Figure 2 shows an exemplary message flow between a requesting entity and a path computation element.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

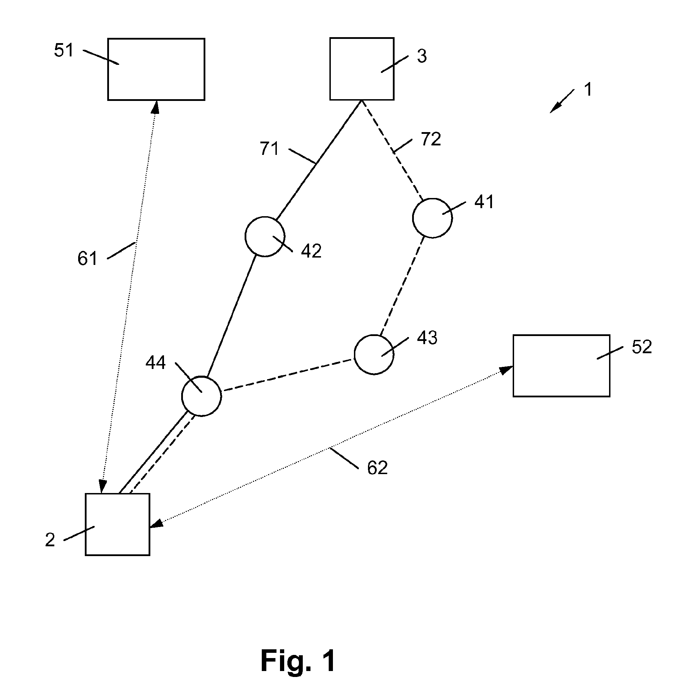

Figure 1 shows an exemplary data network 1, comprising a requesting entity 2 (e.g. a Path Computation Client, PCC for short), a target entity 3, network nodes 41..44 and two path computation elements 51, 52 (PCE for short).

The path computation elements 51, 52, comprise means for receiving a request from a requesting entity 2 requesting a data connection (e.g. for voice, video, text, etc), which provides a particular quality of service, means for computing a data path 71, 72 through the network 1 for the requested data connection and means for reporting the ability to provide a data connection having the requested quality of service to the requesting entity 2. Generally, the requested quality of service can comprise one or more of the parameters delay, jitter, CPU cycle, storage and/or bandwidth.

In a first step of the method for computing a path 71, 72 for a data connection in a network 1, the requesting entity 2 requests a data connection, which provides a particular quality of service. The requesting entity 2 also sends a time limit to the first path computation element 51, within the requesting entity 2 expects a result from the first path computation element 51.

In succession, the first path computation element 51 estimates a time for path computation. If the estimated time exceeds the expected time, the first path computation element 51 reports the inability to compute the path 71 within the expected time back to the requesting entity 2. The connection 61 between the requesting entity 2 and the first path computation element 51 is shown by a dotted line in Fig. 1. The first data path 71 is shown by a solid line.

If the estimated time is within the expected time, the first path computation element 51 may immediately start with computation of a path 71 through the network 1 for the requested data connection. If the estimated time is above the expected time, the first path computation element 51 may immediately start with computation of a path 71 too or may wait for an explicit request from the requesting entity 2 to do so.

In accordance with the procedure disclosed above, the first path computation element 51 also comprises means for receiving a time limit, within the requesting entity 2 expects a result from the path computation element 51, 52, means for estimating a time for path computation and means for reporting the inability to compute the path 71, 72 within the expected time back to the requesting entity 2 if the estimated time is above the expected time.

In the example shown in Fig. 1 a plurality of path computation elements 51, 52 are calculating paths. Concretely, the requesting entity 2 requests a data connection, which provides a particular quality of service, also from a second path computation element 52. As a consequence, also the second path computation element 52 of the network 1 estimates a time for path computation. If the estimated time is within the expected time, the second path computation element 52 computes a second path 72 through the network 1 for the requested data connection. If the estimated time exceeds the expected time the second path computation element 52 reports the inability to compute the path 72 within the expected time back to the requesting entity 2. The connection 62 between the requesting entity 2 and the second path computation element 52 is shown by a dotted line in Fig. 1. The second data path 72 is shown by a dashed line.

The requesting entity 2 may request path calculation from the path computation element 51, 52 at the same time or at different points in time. In particular, the requesting entity 2 stops the data connection request with respect to the first path computation element 51 if it receives a report about the inability to compute the path 71 within the expected time, and requests a data connection from the second path computation element 52. However, the requesting entity 2 may also stop the data connection request completely, if it receives a report about the inability to compute the path 71 within the expected time from the first (or second) path computation element 51, 52. The requesting entity 2 may also keep the data connection request if it receives a report about the inability to compute the path 71, 72 within the expected time. This is a useful approach, if it turns out (later) that the associated path computation element 51, 52 is still the fastest of a group of path computation elements 51, 52.

In a preferred embodiment, the path computation elements 51, 52 not just report the ability to provide a data path 71, 72 within the given time, but also report the estimated time, which is needed for computation, to the requesting entity 2. In this way, the requesting entity 2 gets an information, how much time path calculation presumably will take. For example, path calculation can also take less time than expected by the requesting entity 2. To simplify communication between the requesting entity 2 and the path computation elements 51, 52, the path computation element 51, 52 reports the estimated time only if it is above the expected time in an advantageous embodiment.

The requesting entity 2 may also tolerate an exceed of path computation time, for example it the exceed is negligible or if this exceeding computation time is still the shortest of all received offers. Accordingly, in this embodiment the requesting entity 2 releases the path computation element 51, 52 or stops the data connection request only if the deviation of the estimated time from the expected time exceeds a given threshold. The deviation of the estimated time from the expected time for example may be determined by the difference or the ratio between the estimated time and the expected time.

In a further preferred embodiment, the path computation elements 51, 52 during path computation estimate the time for finishing path computation and report a need for additional time to the requesting entity 2 if the estimated time is above the expected time. In this way, also unexpected delays during path computation are taken into consideration. Accordingly, the requesting entity 2 can decide how to deal with unexpected exceedance of computation time. The consequences of an unexpected exceedance of computation time can be the same consequences, which are taken if the exceedance is reported before starting computation. That means that the requesting entity 2 can release the path computation element 51, 52, from which it receives a report about the inability to compute the path 71, 72 within the expected time, and can request a data connection from another path computation element 51, 52. The requesting entity 2 may also completely abandon the data connection request in such a case. Of course, the requesting entity 2 may also tolerate a (negligible) time exceedance.

Generally, a path computation element 51, 52 can autonomously stop path calculation if it detects a time exceedance. It is also possible, that path calculation can (also) be stopped by a request of the requesting entity 2. For instance in case of parallel interrogation of multiple path computation elements 51, 52 it is useful that the path computation continues until the requesting entity 2 deselects those which are not competitive.

In Fig. 1 just two path computation elements 51, 52 are shown. However, one skilled in the art will easily perceive that the shown principle also applies to more than two path computation elements 51, 52. Furthermore, one will easily perceive that the shown principle also applies to the computation of path trees and overlay networks. In this context, a "path" can be seen as a sub connection of a path tree and/or an overlay network. Accordingly, nevertheless Fig. 1 is shown with respect to a P2P connection, it equally applies to P2MP connections and MP2MP connections.

It should also be noted that the requesting entity is not necessarily part of the requested data connection. The requesting entity may also request the data connection on behalf of the communication partners. For instance a Virtual network Operator (VNO) may request an overlay network via a Virtual Network Provider (VNP) in order to connect its subscribers to the overlay network, or the VNO may request to connect its Virtual Machines (VM) to the overlay network.

Furthermore, it should be noted that nevertheless Fig. 1 shows just a single network 1, the network 1 may consist of several (interconnected) physical networks offered by different Physical Infrastructure Providers (PIPs). These sub networks are combined to network 1, on which the VNO can request a virtual network / overlay network to be established.

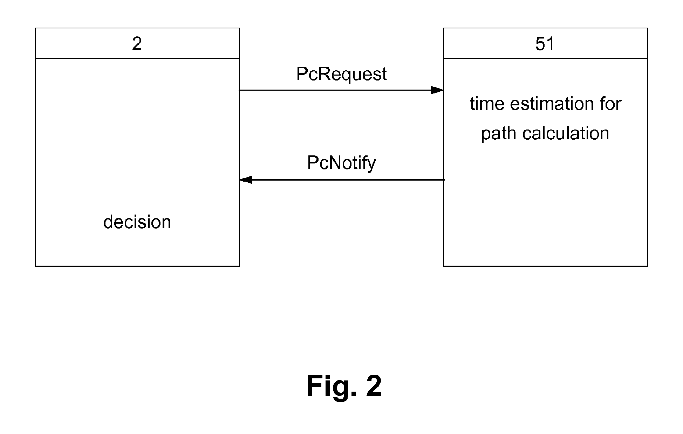

Fig. 2 now shows an exemplary message flow between the requesting entity 2 and the first path computation element 51, i.e. communication over connection 61. However, Fig. 2 is not limited to the first path computation element 51, but the requesting entity 2 and the second path computation element 52 may communicate in the same or a similar way.

By way of example, the "Path Computation Element Protocol" is used for communication between the requesting entity 2 and the first path computation element 51. Concretely, the "PcRequest" message of the "Path Computation Element Protocol" is used for reporting the time limit for the computation of the path 71, 72 to the path computation element 51, 52 and the "PcNotify" message of the "Path Computation Element Protocol" is used for reporting the inability to compute the path 71 within the expected time back to the requesting entity 2.

In a first step, a PcRequest message is sent from the requesting entity 2 to the first path computation element 51. The PcRequest message comprises the requested quality of service and also the time limit, within the requesting entity 2 expects a result from the first path computation element 51. In succession, the first path computation element 51 estimates the effort for calculating a data path 71 for the requested data connection. If the estimated time exceeds the expected time, the first path computation element 51 reports its inability to compute the path 71 within the expected time by means of the PcNotify message. This message may also comprise the computation time estimated by the first path computation element 51. On receiving the PcNotify message, the requesting entity 2 decides how to deal with the time exceedance. For example, the requesting entity 2 may indicate the cancellation of the pending request by means of a "PcNotify" message to the first path computation element 51.

The measures, which were taken above, provide a number of advantages:
- A meaningful decision basis is given to the requesting entity 2 if the path computation elements 51, 52 are unable to deliver results in time.
- Useless calculation work for results, which are discarded by the requesting entity 2 because of a delay, is avoided.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state that the requesting entity 2 is not kept in suspense but informed about the time line of the next steps.

### List of reference signs:

- 1: data network
- 2: requesting entity
- 3: target entity
- 41..44: network nodes
- 51, 52: path computation elements
- 61, 62: connection to path computation element
- 71, 72: data path

## Claims

1. Method of computing a path (71, 72) for a data connection in a network (1), wherein a requesting entity (2) requests a data connection, which provides a particular quality of service, and wherein a path computation element (51, 52) of the network (1) computes a path (71, 72) through the network (1) for the requested data connection,
- wherein the requesting entity (2) sends a time limit to the path computation element (51, 52), within the requesting entity (2) expects a result from the path computation element (51, 52),
- wherein the path computation element (51, 52) estimates a time for path computation and
- wherein the path computation element (51, 52) reports the inability to compute the path (71, 72) within the expected time back to the requesting entity (2) if the estimated time is above the expected time.

2. Method as set forth in claim 1, wherein a path tree and/or an overlay network is computed for the requested data connection.

3. Method as set forth in claim 1 or 2, wherein the path computation element (51, 52) starts computing the path (71, 72) if the estimated time is within the expected time.

4. Method as set forth in claim 1 or 2, wherein the path computation element (51, 52) starts computing the path (71, 72) on request of the requesting entity (2).

5. Method as set forth in any one of the preceding claims, wherein the path computation element (51, 52) reports the estimated time to the requesting entity (2).

6. Method as set forth in claim 5, wherein the path computation element (51, 52) reports the estimated time only if it is above the expected time.

7. Method as set forth in any one of the preceding claims, wherein the path computation element (51, 52) during path computation estimates the time for finishing path computation and reports a need for additional time to the requesting entity (2) if the estimated time is above the expected time.

8. Method as set forth in any one of the claims 1 to 7, wherein the requesting entity (2) stops the data connection request with respect to the path computation element (51, 52), from which it received a report about the inability to compute the path (71, 72) within the expected time, and requests a data connection from another path computation element (51, 52).

9. Method as set forth in any one of the claims 1 to 7, wherein the requesting entity (2) stops the data connection request if it receives a report about the inability to compute the path (71, 72) within the expected time from a path computation element (51, 52).

10. Method as set forth in claim 8 or 9, wherein the requesting entity (2) releases the path computation element (51, 52) or stops the data connection request only if the deviation of the estimated time from the expected time exceeds a given threshold.

11. Method as set forth in any one of the preceding claims, wherein the requesting entity (2) sends requests for a data connection to a plurality of path computation elements (51, 52) in parallel.

12. Method as set forth in any one of the preceding claims, wherein the requested quality of service comprises one or more of the parameters delay, jitter, CPU cycle, storage and/or bandwidth.

13. Method as set forth in any one of the preceding claims, wherein the "Path Computation Element Protocol" is used for communication between the requesting entity (2) and the path computation element (51, 52).

14. Method as set forth in claim 13, wherein the "PcRequest" message of the "Path Computation Element Protocol" is used for reporting the time limit for the computation of the path (71, 72) to the path computation element (51, 52).

15. Method as set forth in claim 13 or 14, wherein the "PcNotify" message of the "Path Computation Element Protocol" is used for reporting the inability to compute the path (71, 72) within the expected time back to the requesting entity (2).

16. Path computation element (51, 52), comprising
- means for receiving a request from a requesting entity (2) requesting a data connection, which provides a particular quality of service,
- means for computing a data path (71, 72) through the network (1) for the requested data connection and
- means for reporting the ability to provide a data connection having the requested quality of service to the requesting entity (2),
and additionally
- means for receiving a time limit, within the requesting entity (2) expects a result from the path computation element (51, 52),
- means for estimating a time for path computation and
- means for reporting the inability to compute the path (71, 72) within the expected time back to the requesting entity (2) if the estimated time is above the expected time.

17. Data network (1), comprising one or more path computation elements (51, 52) as set forth in claim 16.
